# EUROPÄISCHE PATENTANMELDUNG

(11) **EP 1 418 572 A1**
(43) Veröffentlichungstag der Anmeldung: **12.05.2004**
(21) Anmeldenummer: 03017021.1
(22) Anmeldetag: 26.07.2003
(51) Int. Cl.: G10L 21/02, H04M 1/19, B60R 11/02

(54) **Verfahren zur Störgeräuschunterdrückung**

(30) Priorität: 06.11.2002 DE 10251603
(71) Anmelder: Dr.Ing. h.c.F. Porsche Aktiengesellschaft, 70435 Stuttgart (DE)
(72) Erfinder: Stankewitz, Britta, 75181 Pforzheim (DE)

(57) **Zusammenfassung**

Es wird ein Verfahren zur Unterdrückung des Umgebungsgeräusches bei Telefongesprächen zwischen mindestens zwei Telefonpartnern vorgeschlagen. Zur Durchführung des Verfahrens werden die Umgebungsgeräusche gemessen und anhand eines Algorithmus die Parameter zur Unterdrückung dieser Umgebungsgeräusche bestimmt. Des weiteren wird vorgeschlagen, bei Verwendung eines Mobiltelefons in einem Fahrzeug beim Erkennen eines Gesprächsaufbaus die Fahrzeugparameter zu erfassen und aufgrund der aktuell erfaßten Fahrzeugparameter Ausgangsparameter für die Störgeräuschunterdrückung aus einem Kennfeld, welches in der Applikation ermittelt wurde, zu entnehmen.

## Beschreibung

Die vorliegende Erfindung betrifft ein Verfahren zur Störgeräuschunterdrückung bei der Nutzung eines Mobiltelefons, wobei bei den im Stand der Technik bekannten Verfahren üblicherweise anhand von Algorithmen die Stimmen des Benutzers des Mobiltelefons von den anderen Lauten oder Geräuschen der Umgebung des Mobiltelefons isoliert wird. Die Problematik verschiedener Algorithmen besteht darin, daß sie eine gewisse Zeit benötigen, um nach Gesprächsbeginn wirksam die Störgeräusche zu unterdrücken. Dieser Zeitabschnitt wird üblicherweise als Lernphase bezeichnet. Während dieser Lernphase werden die Geräuschpegel der Umgebung erfaßt und die Filterung so angepaßt, daß die Umgebungsgeräusche unterdrückt werden können.

Das erfindungsgemäße Verfahren geht aus von einem Verfahren, wie es bereits aus der DE 100 25 869 A1 bekannt ist. Diese DE 100 25 869 A1 beschreibt eine Möglichkeit durch einen Frühstart des Algorithmus zur Geräuschunterdrückung die Lernphase zu reduzieren. Dies erfolgt in der Art, dass bereits beim Aufbau eines Gespräches am Mobiltelefon bereits während der Wählphase, also bevor die Kommunikation zustande kommt, die Umgebungsgeräusche erfaßt werden und der Algorithmus entsprechend früher startet.

Ausgehend von diesen bekannten Verfahren wird eine Möglichkeit der Störgeräuschunterdrückung beim Freisprechen in Fahrzeugen vorgeschlagen, welches den Zeitraum zum Schaffen möglichst optimaler Gesprächsbedingungen noch weiter verkürzt und dabei keinen größeren technischen und rechnerischen Aufwand bedingt. Durch die Abfrage der aktuellen Betriebsparameter beim Gesprächsaufbau können die Werte für die Störgeräuschunterdrückung direkt einem vorher ermittelten und gespeicherten Kennfeld entnommen werden, was zu einer noch schnelleren Anpassung der Sprech- und Hörqualität eines Mobiltelefons im Fahrzeug führt.

Durch die in den Unteransprüchen angegebenen Merkmale sind weitere vorteilhafte Maßnahmen zur Durchführung des erfindungsgemäßen Verfahrens angegeben.

Die Ermittlung des Kennfeldes in der Applikation ermöglicht es, für jede Fahrsituation die besten Ausgangswerte für die Störgeräuschunterdrückung bereitzustellen.

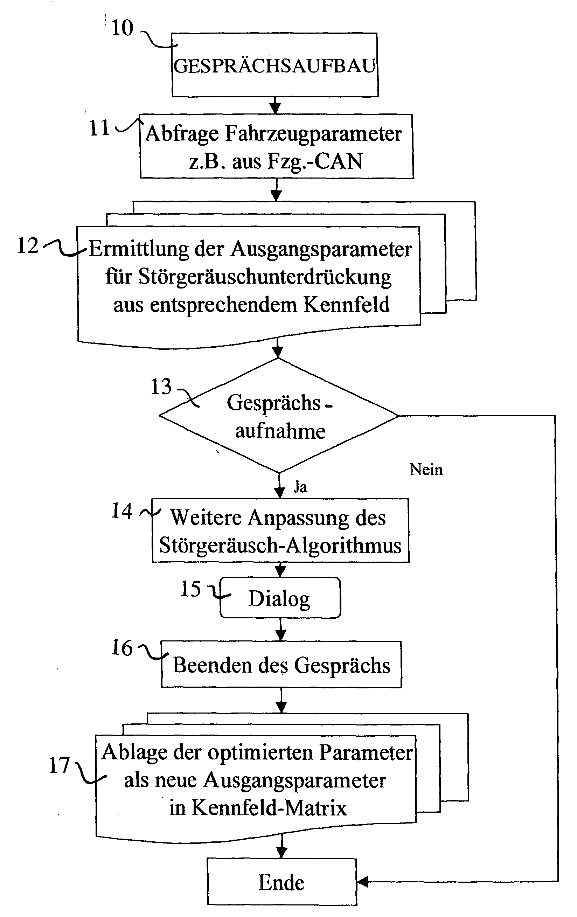

Ein weiterer Vorteil ergibt sich daraus, dass die im Kennfeld abgelegten Werte während des Gespräches ständig den aktuellen Bedingungen nachgeführt werden und am Ende des Gespräches als neue Kennfeldwerte gespeichert werde. Damit ist das System lernend und es werden beispielsweise aktuelle Veränderungen oder auch Alterungserscheinungen, die ein anderes Umgebungsgeräusch bedingen, bei einem neuen Gespräch von Anfang an berücksichtigt.
Ausführungsbeispiele der Erfindung sind in der Zeichnung dargestellt und in der nachfolgenden Beschreibung näher erläutert.

Die Figur zeigt den erfindungsgemäßen Algorithmus zum Einstellen der Störgeräuschunterdrückung beim Freisprechen an einem Mobiltelefon in einem Kraftfahrzeug.

Die Nutzung eines Mobiltelefones in einem Fahrzeug stellt erhöhte Anforderungen an die Störgeräuschunterdrückung. Das im Auto vorgeschriebene Freisprechen bei Nutzung eines Mobiltelefones und der durch das Fahrzeug ohnehin schon vorherrschende Geräuschpegel sind Faktoren, die einen sehr schnell arbeitenden Algorithmus zur Störgeräuschunterdrückung bedingen.

Bei dem erfindungsgemäßen Verfahren wird in einem ersten Arbeitsschritt 10 das Mobiltelefon dahingehend überwacht, ob entweder ausgehend von diesem Mobiltelefon oder von einem anderen Telefon an diesem Mobiltelefon ankommend ein Gesprächsaufbau stattfindet. Hierbei kann beispielsweise der Eingang eingehender Gespräche erfaßt werden oder bereits bei Beginn eines Wählvorganges dies als Gesprächsaufbau signalisiert werden.

Nach dem Erkennen eines Gesprächsaufbaus am Mobiltelefon werden in einem Arbeitsschritt 11 die aktuellen Fahrzeugparameter erfaßt. Dies sind beispielsweise die aktuelle Geschwindigkeit v, Drehzahl n, Last L, aber auch die augenblickliche Fensterstellung (Fenster auf oder zu) und beispielsweise bei einem Cabrio die Verdeckstellung (Verdeck offen oder geschlossen) ermittelt. Diese Fahrzeugparameter werden über ein entsprechendes System, beispielsweise einem CAN-BUS, an hier nicht dargestellte Steuereinheit zur Störgeräuschunterdrückung weitergeleitet. Aufgrund der ermittelten Fahrzeugparameter werden nun in einem Arbeitsschritt 11 die Ausgangsparameter für die Störgeräuschunterdrückung aus einem entsprechenden Kennfeld entnommen. Damit ist bereits bei einem möglichen Gesprächsbeginn die Störgeräuschunterdrückung optimiert. Wurde in dem Schritt 13 die Gesprächsaufnahme letztendlich nicht durchgeführt, so springt das System direkt an das Ende dieses erfindungsgemäßen Verfahrens. Erfolgt jedoch eine Gesprächsaufnahme, wird in einem nachfolgenden Schritt 14 die Störgeräuschunterdrückung weiter optimiert. Dieser Algorithmus ist bereits aus dem Stand der Technik bekannt und soll hier nicht nochmals erläutert werden. Während des Dialoges erfolgt also eine Optimierung des Algorithmus zur Störgeräuschunterdrückung. Da bei Beginn des Algorithmus bereits verschiedene Berechnungsdaten fahrzeugs- und situationsangepaßt vorliegen, sind insgesamt weniger Berechnungen durchzuführen und es kann eine einfachere Recheneinheit für die Durchführung des Algorithmus eingesetzt werden. Nach dem Beenden des Gespräches im Arbeitsschritt 16 erfolgt im Arbeitsschritt 17 eine Ablage der soeben optimierten Parameter als neue Ausgangsparameter im Kennfeld.

Damit werden die Kennfeldwerte zur Ausgabe der Ausgangsparameter für die Störgeräuschunterdrückung ständig gelernt und selbst Verschleißerscheinungen oder Veränderungen der Fahrzeugbedingungen können die optimale Störgeräuschunterdrückung nicht beeinträchtigen. Die Inhalte des Kennfeldes werden zunächst bei der Applikation ermittelt und als Grundparameter im Steuergerät abgelegt. Durch die Möglichkeit, nach Beendigung eines Gespräches die während des Gesprächs optimierten berechneten Parameter unter der Berücksichtigung der jeweiligen Fahrzeugparameter als neue Ausgangsparameter abzulegen, ergibt sich eine verbesserte und noch schnellere Anpassung an die jeweiligen Umgebungsbedingungen.

## Patentansprüche

1. Verfahren zur Unterdrückung des Umgebungsgeräusches bei Telefongesprächen zwischen mindestens zwei Telefonpartnern, wobei die Umgebungsgeräusche gemessen werden, und wobei Parameter zur Unterdrückung dieser Umgebungsgeräusche bestimmt werden, **dadurch gekennzeichnet, daß** bei Verwendung eines Mobiltelefons in einem Fahrzeug beim Erkennen eines Gesprächsaufbaus die Fahrzeugparameter erfaßt werden und aufgrund der aktuell erfaßten Fahrzeugparameter Ausgangsparameter für die Störgeräuschunterdrückung aus einem entsprechenden Kennfeld entnommen werden.

2. Verfahren nach Anspruch 1, **dadurch gekennzeichnet, daß** während des geführten Gespräches die Ausgangsparameter weiter verbessert werden und bei Beendigung des Gespräches als neue Ausgangsparameter im Kennfeld abgelegt werden.

3. Verfahren nach Anspruch 1, **dadurch gekennzeichnet, daß** als Fahrzeugparameter die Geschwindigkeit, die Last, die Drehzahl und/oder die Fensterstellung und ggf. die Verdeckstellung ermittelt werden.
